# EUROPEAN PATENT APPLICATION

(11) **EP 4 848 127 A1**
(43) Date of publication of application: **02.12.2026**
(21) Application number: 25212531.5
(22) Date of filing: 30.10.2025
(51) Int. Cl.: G06F 21/62

(54) **PRIVACY PRESERVING CROSS DEVICE DATA CONNECTIONS**

(30) Priority: 30.05.2025 US 202519223708
(71) Applicant: GOOGLE LLC, Mountain View CA 94043 (US)
(72) Inventor: BASU, Riyana, Mountain View, 94043 (US); KIM, Yoo Kyung, Mountain View, 94043 (US); BANSAL, Ishan, Mountain View, 94043 (US)
(74) Representative: Marks & Clerk GST

(57) **Abstract**

Methods, systems, and apparatus, including computer programs encoded on a computer storage medium, for creating privacy preserving cross device data connections. A first interaction is detected based on first data including a service identifier. A mapping between the service identifier and the first interaction is stored in a first database. A second interaction is detected based on second data including the service identifier and a device identifier of a second device. A mapping between the device identifier and the second interaction is stored in a second database. The first interaction is fetched from the first database using the service identifier. The first interaction is encrypted and mapped to the second interaction. Generation or distribution of digital components is modified based on the mapped encrypted first interaction.

## Description

### BACKGROUND

The present disclosure relates to connecting actions performed on computing devices while maintaining privacy and data security, and more particularly to methods, systems, and computer program products for connecting actions across devices while protecting user data.

### SUMMARY

In general, one innovative aspect of the subject matter described in this specification can be embodied in methods that include the actions of detecting, by one or more data processing apparatus, a first interaction at a first device based on first interaction data that includes (i) a service identifier assigned by a service system and (ii) first interaction type data specifying a first type of interaction that occurred at the first device, wherein the first interaction data does not include a first device identifier of the first device; generating, by the one or more data processing apparatus, a first mapping between the service identifier and the first interaction type data in a first database, wherein the service identifier operates as a first key for identifying the first interaction type data in the first database; detecting, by the one or more data processing apparatus, a second interaction at a second device based on second interaction data that includes (i) the service identifier assigned by the service system, (ii) a second device identifier of the second device, and (iii) second interaction type data specifying a second type of interaction that occurred at the second device; generating, by the one or more data processing apparatus, a second mapping between the second device identifier of the second device and the second interaction type data in a second database that differs from the first database, wherein the second device identifier operates as a second key for identifying the second interaction type data in the second database; fetching, by the one or more data processing apparatus and in response to detecting the second interaction, the first interaction type data from the first database based on a search of the first database using the service identifier received in the second interaction data as the second key; encrypting, by the one or more data processing apparatus, the first interaction type data fetched based on the search, thereby resulting in encrypted first interaction data; generating, by the one or more data processing apparatus, a third mapping between the encrypted first interaction data and the second interaction type data in the second database; and modifying generation or distribution of digital components through a network based on the third mapping between the encrypted first interaction data and the second interaction type data. Other embodiments of this aspect include corresponding systems, apparatus, and computer programs, configured to perform the actions of the methods, encoded on computer storage devices.

These and other embodiments can each optionally include one or more of the following features. Encrypting the first interaction type data fetched based on the search can include encrypting a click interaction identifier, resulting in an encrypted click interaction identifier. Generating the third mapping between the encrypted first interaction data and the second interaction data in the second database can include generating a mapping between the encrypted click interaction identifier and the second interaction data in the second database.

Detecting the first interaction at the first device can include detecting the click interaction at a first time. Detecting the second interaction at the second device can include detecting a conversion interaction at a second time. Generating the third mapping can include storing an attribution of the conversion interaction to the client interaction.

Methods can include generating a first fuzzy timestamp by applying noise to a timestamp representing the first time of the click interaction to obfuscate a time at which the click interaction occurred. Fetching the first interaction type data from the first database can include initiating a search of the first database using the service identifier received in the second interaction data as the second key; receiving a set of matching database records having a search key that matches the second key; and identifying, among the set of matching database records, the first interaction type data as a responsive search result to the search based on the first fuzzy timestamp being within a specified lookback period prior to the second time of the conversion interaction.

Methods can include determining that a given matching database record among the set of matching database records has a second fuzzy timestamp that is outside of the specified lookback period; and discarding the given matching database record based on the determination that the second fuzzy timestamp is outside of the specified lookback period.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which privacy preserving data connections can be made.
FIG. 2 is a block diagram illustrating a system for generating connections between data while preserving privacy.
FIG. 3 is a flow chart of an example process for generating connections between data while preserving privacy.
FIG. 4 is a block diagram of an example computer system.

Like reference numbers and designations in the various drawings indicate like elements.

### DETAILED DESCRIPTION

The subject matter of this specification relates to making connections between data across devices. For example, a given set of data generated in response to a given user interaction at a given device can be connected to a different set of data generated in response to a different user interaction at a different device. More specifically, the connection between the two sets of data can be made even in situations where the different set of data does not include a same identifier as the given set of data.

As used herein, a situation where two sets of related data do not include a matching (e.g., the same) identifier, which prevents the connection or assembly of the two sets of related data, is referred to as a broken data link or data fragmentation. When broken data links occur, conventional systems are unable to determine that the two sets of data are related, and are therefore unable to aggregate, combine, or stitch the information together for analysis. This leads to wasted resources used to generate, transmit, collect, and store the data because analysis of the aggregate set of data (e.g., data from both sets of data) is limited when the two sets of data cannot be connected by way of a matching identifier.

The problem of data fragmentation can occur for many reasons. For example, data can be inadvertently separated and stored without a common key to rejoin the data. However, data fragmentation can also be part of a purposeful design strategy to secure/protect data. For example, by storing two sets of related data separately in different systems, no single system holds the full dataset, such that if one system is compromised, it is less likely that sensitive information in full dataset being protected will be revealed. Similarly, when two sets of related data are stored in different systems it can prevent the reassembly of the full dataset, which is part of data protection regulations such as General Data Protection Regulation ("GDPR"). As data protection requirements continue to increase, it often leads to increased data fragmentation making it even more difficult to meaningfully collect and analyze full datasets becomes, thereby rendering conventional systems unable to perform analysis that was possible before the data fragmentation.

To solve the problem of data fragmentation, and the resulting inability to perform analysis on a full dataset, the techniques described herein utilize rare data instances to create a connection between two different identifiers, which enables a connection between two disparate datasets that each only include one of the two different identifiers. Once the connection is made, the two datasets can then be aggregated, thereby allowing for analysis on the full dataset (e.g., the aggregation and/or combination of the two disparate datasets). As discussed in detail below, when the two disparate datasets are merged to obtain the full dataset, portions of the data can be obfuscated so as to maintain compliance with privacy regulations, while still enabling analysis of the full dataset by a single system.

The examples provided herein refer to specific use cases, but the techniques are widely applicable to any situation in which two different portions of a full dataset are maintained as separate sub-datasets (e.g., disparate sets of the data in the full dataset). In a specific example, when data generated by one device is stored in a given system, the data generated by a different device is stored in a different system, and the data generated by the two systems are non-overlapping, the techniques discussed herein can be used to generate a connection between the data generated by the two devices despite there not being a mutual (e.g., matching) key in the two data sets, thereby enabling analysis of the full dataset.

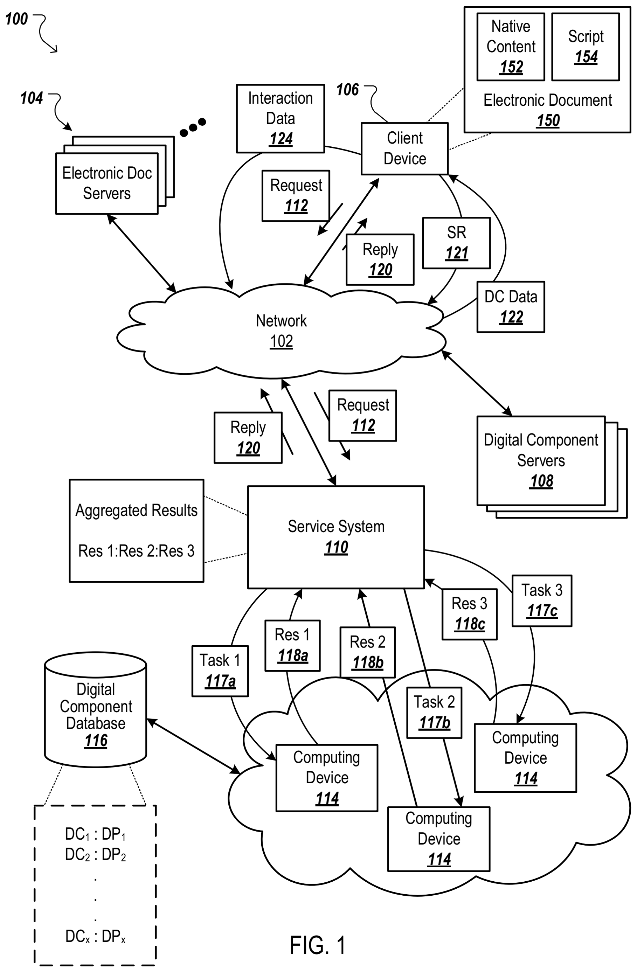

FIG. 1 is a block diagram of an example environment 100 in which privacy preserving cross device data connections can be made. The example environment 100 includes a network 102, such as a local area network (LAN), a wide area network (WAN), the Internet, or a combination thereof. The network 102 connects electronic document servers 104, user devices 106, digital component servers 108, and a service system 110. The example environment 100 may include many different electronic document servers 104, user devices 106, and digital component servers 108.

A client device 106 is an electronic device that is capable of requesting and receiving online resources over the network 102. Example client devices 106 include personal computers, gaming devices, mobile communication devices, digital assistant devices, augmented reality devices, virtual reality devices, and other devices that can send and receive data over the network 102. A client device 106 typically includes a user application, such as a web browser, to facilitate the sending and receiving of data over the network 102, but native applications (other than browsers) executed by the client device 106 can also facilitate the sending and receiving of data over the network 102.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally, or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

As illustrated, the client device 106 is presenting an electronic document 150. An electronic document is data that presents a set of content at a client device 106. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 106 by electronic document servers 104 ("Electronic Doc Servers").

For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download apps. In this example, the client device 106 can download files required to install an app at the client device 106, and then execute the downloaded app locally. Alternatively, or additionally, the client device 106 can initiate a request to execute the app, which is transmitted to a cloud server. In response to receiving the request, the cloud server can execute the application and stream a user interface of the application to the client device 106 so that the client device 106 does not have to execute the app itself. Rather, the client device 106 can present the user interface generated by the cloud server's execution of the app, and communicate any user interactions with the user interface back to the cloud server for processing.

Electronic documents can include a variety of content. For example, an electronic document 150 can include native content 152 that is within the electronic document 150 itself and/or does not change over time. Electronic documents can also include dynamic content that may change over time or on a per-request basis. For example, a publisher of a given electronic document (e.g., electronic document 150) can maintain a data source that is used to populate portions of the electronic document. In this example, the given electronic document can include a script, such as the script 154, that causes the client device 106 to request content (e.g., digital component) from the data source when the given electronic document is processed (e.g., rendered or executed) by a client device 106 (or a cloud server). The client device 106 (or cloud server) integrates the content (e.g., digital component) obtained from the data source into the given electronic document to create a composite electronic document including the content obtained from the data source.

In some situations, a given electronic document (e.g., electronic document 150) can include a digital component script (e.g., script 154) that references the service system 110, or a particular service provided by the service system 110. In these situations, the digital component script is executed by the client device 106 when the given electronic document is processed by the client device 106. Execution of the digital component script configures the client device 106 to generate a request for digital components 112 (referred to as a "component request"), which is transmitted over the network 102 to the service system 110. For example, the digital component script can enable the client device 106 to generate a packetized data request including a header and payload data. The component request 112 can include event data specifying features such as a name (or network location) of a server from which the digital component is being requested, a device identifier corresponding the computing device 106, such as a name (or network location, such as an Internet Protocol address) of the requesting device (e.g., the computing device 106), a cookie of the service system 110 that was previously placed on the computing device by the service system 110, and/or information that the service system 110 can use to select one or more digital components, or other content, provided in response to the request. In some implementations, the cookie that is included in the component request 112 can be a cookie corresponding to an account of a user that is logged into the service system 110, which is referred to as a service cookie. The component request 112 is transmitted, by the client device 106, over the network 102 (e.g., a telecommunications network) to a server of the service system 110.

The component request 112 can include event data specifying other event features, such as the electronic document being requested and characteristics of locations of the electronic document at which digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the service system 110. Similarly, event data specifying keywords associated with the electronic document ("document keywords") or entities (e.g., people, places, or things) that are referenced by the electronic document can also be included in the component request 112 (e.g., as payload data) and provided to the service system 110 to facilitate identification of digital components that are eligible for presentation with the electronic document. The event data can also include a search query that was submitted from the client device 106 to obtain a search results page.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The service system 110 chooses digital components (e.g., third-party content, such as video files, audio files, images, text, and combinations thereof, which can all take the form of advertising content or non-advertising content) that will be presented with the given electronic document (e.g., at a location specified by the script 154) in response to receiving the component request 112 and/or using information included in the component request 112.

In some implementations, a digital component is selected in less than a second to avoid errors that could be caused by delayed selection of the digital component. For example, delays in providing digital components in response to a component request 112 can result in page load errors at the client device 106 or cause portions of the electronic document to remain unpopulated even after other portions of the electronic document are presented at the client device 106.

Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided.

In some implementations, the service system 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC1-x). The millions of available digital components can be indexed, for example, in a digital component database 116. Each digital component index entry can reference the corresponding digital component and/or include distribution parameters (DP1-DPx) that contribute to (e.g., trigger, condition, or limit) the distribution/transmission of the corresponding digital component. For example, the distribution parameters can contribute to (e.g., trigger) the transmission of a digital component by requiring that a component request include at least one criterion that matches (e.g., either exactly or with some pre-specified level of similarity) one of the distribution parameters of the digital component.

In some implementations, the distribution parameters for a particular digital component can include distribution keywords that must be matched (e.g., by electronic documents, document keywords, or terms specified in the component request 112) in order for the digital component to be eligible for presentation. Additionally, or alternatively, the distribution parameters can include embeddings that can use various different dimensions of data, such as website details and/or consumption details (e.g., page viewport, user scrolling speed, or other information about the consumption of data). The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation. The distribution parameters can also specify an eligibility value (e.g., ranking score, or some other specified value) that is used for evaluating the eligibility of the digital component for distribution/transmission (e.g., among other available digital components).

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the service system 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The service system 110 aggregates the results 118a-118c received from the set of multiple computing devices 114 and uses information associated with the aggregated results to select one or more digital components that will be provided in response to the request 112. For example, the service system 110 can select a set of winning digital components (one or more digital components) based on the outcome of one or more content evaluation processes, as discussed below. In turn, the service system 110 can generate and transmit, over the network 102, reply data 120 (e.g., digital data representing a reply) that enable the client device 106 to integrate the set of winning digital components into the given electronic document, such that the set of winning digital components (e.g., winning third-party content) and the content of the electronic document are presented together at a display of the client device 106.

In some implementations, the client device 106 executes instructions included in the reply data 120, which configures and enables the client device 106 to obtain the set of winning digital components from one or more digital component servers 108. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit, to the client device 106, digital component data (DC Data) 122 that presents the given winning digital component in the electronic document at the client device 106.

When the client device 106 receives the digital component data 122, the client device will render the digital component (e.g., third-party content), and present the digital component at a location specified by, or assigned to, the script 154. For example, the script 154 can create a walled garden environment, such as a frame, that is presented within, e.g., besides the native content 152 of the electronic document 150. In some implementations, the digital component is overlaid over (or adjacent to) a portion of the native content 152 of the electronic document 150, and the service system 110 can specify the presentation location within the electronic document 150 in the reply 120.

The service system 110 can be configured to attribute actions/interactions performed at the computing device 106 to presentations of digital components and/or interactions with digital components. For example, when the computing device 106 presents the digital component, a user may interact with (e.g., click, swipe, focus on, or otherwise affirmatively take action directed to) the digital component. Interaction with the digital component triggers the firing of a reporting tag that transmits interaction data 124 (e.g., a first set of interaction data) to the service system 110. The interaction data 124 can include, for example, an interaction type identifier that specifies the type of interaction (e.g., click, hover, focus, etc.), a unique interaction identifier that uniquely identifies and/or distinguishes the particular interaction relative to other interactions (e.g., Click ID), a timestamp indicating when the interaction occurred, an identifier of the entity that provided the digital component (e.g., content provider account identifier), and/or other information corresponding to the interaction performed at the computing device 106. The interaction data 124 can also include, or be provided to the service system 110 with, at least some of the event data discussed above and/or a service identifier that was stored at the computing device 106 at a time of the interaction (e.g., a service cookie of a user signed into the service system).

Similarly, when the user of the computing device 106 continues to perform an additional action (e.g., different action) at a third-party website to which the computing device is directed in response to interaction with the digital component, a tag (e.g., executable script) at the third-party website can be triggered to fire (e.g., execute), which can provide another set of interaction data (e.g., a second set of interaction data) specifying the type of interaction performed (e.g., conversion), and including at least some of the event data discussed above and/or the interaction data discussed above with reference to the interaction with the digital component (e.g., timestamp, identifier of the entity that provided the digital component, and unique interaction identifier).

Generally, the third-party website at which the additional action is performed will be in a different second level domain than the second level domain of the service apparatus. For example, assume that the second level domain of the service system is example[.]com, such that the service cookie of the second level service domain is an example[.]com service cookie. In this particular example, the third-party website to which the computing device 106 is directed in response to interaction with the digital component, and at which the additional action is performed, will be a second level domain that is different than example[.]com, such as examplethirdparty[.]com. As such, cookies of the third-party website will be examplethirdparty[.]com, which are first-party cookies to the examplethirdparty[.]com domain and third-party cookies to the example[.]com domain. On the other hand, the service cookie of the service system 110 will be a first-party cookie to the example[.]com domain, and a third-party cookie to the examplethirdparty[.]com domain.

When all of the actions/interactions discussed above (e.g., digital component presentation, digital component interaction, and additional action at the third-party website) are performed using the same computing device 106, there is generally a common set of data available to the service system 110 that enables the service system to determine that the additional action at the third-party website, the interaction with the digital component, and the presentation of the digital component are all connected, such that the additional action at the third-party website can be attributed to one of, or each of, the interaction with the digital component and/or the presentation of the digital component that occurred in a different domain than that of the third-party website. However, when the actions are not all performed on the same computing device 106, it becomes much more difficult for the service system 110 to make connections between the different actions. This problem is expanding due to the connected nature of more devices, such as streaming devices, Internet connected televisions, etc., because many of these devices do not provide a device identifier or do not store a service system domain cookie. Additionally, these devices may require a user to use a different device (e.g., mobile device) to complete certain actions, such that a set of interactions are performed using one type of device, and one or more additional actions may be performed using the different device. This can lead to data fragmentation, with the interactions performed at one type of device being stored in a given database, the additional interactions performed at the different device being stored in a different database, and there is no join key (e.g., device identifier or cookie) that can be used to join the data from the two databases.

The ability of the service system 110 to make these connections is even more difficult while the service system 110 is also implementing privacy protections that limit access to certain data corresponding to the actions. For example, third party cookie restrictions (e.g., blocking) and other privacy protection technologies and/or policies can prevent the service system 110 from being able to directly collect and/or compare data from each of the actions to make the connection. In other words, these restrictions provide technical barriers to collecting and comparing data, such that the service system 110 can be incapable of performing these operations absent changes to the service system 110. Because of these restrictions, privacy preserving techniques are needed to overcome the challenge of making the connections between actions that occur across two or more different computing devices.

The techniques discussed in this specification enable the service system 110 to make connections between a presentation of content (e.g., a digital component), interaction with the content, and/or additional actions taken at a third-party online resource (e.g., website or native application) even though the service apparatus 110 is prevented from accessing or using certain data that would enable the service system 110 to make the connections. As discussed in more detail below, the techniques include the use of encryption and time stamp obfuscation to ensure compliance with user data protection policies.

More specifically, the service system 110 can link/map data stored in a given database with a particular identifier, such as a device identifier specifying a device at which an interaction occurred, with different data stored in a different database that does not include the device identifier. As explained in more detail below, even though the different data is not stored with a reference to (e.g., not logically mapped to) the device identifier, the different data can be stored in the different database with a service identifier. When this service identifier is received with other data being stored in the given database, which includes the device identifier, the service identifier can be used to fetch data that is mapped to the service identifier (e.g., stored in the different database indexed to the service identifier, or otherwise stored in association with the service identifier). The fetched data can be encrypted, and the encrypted fetched data can be stored in the given database with a reference to (e.g., logically mapped to) the device identifier and/or the data previously stored in the given database with the device identifier. In this way, a connection is made, within a single database, between the data stored in the different database - e.g., the data keyed/mapped to the service identifier - without revealing the plaintext of the data stored in the different database in the given database. In this way, user data protections, which may prohibit storing the data stored in the different database from being directly associated with the device identifier since the device identifier was not provided to the system with that data. However, processing that benefits from joining the data can still be carried out in a privacy preserving manner, thereby enabling the system to perform operations that it could not previously perform while complying with user data protections.

In some implementations, various operations discussed throughout this specification can be performed within a trusted execution environment (TEE), which ensures that data processing is performed in a privacy preserving manner, such that certain plaintext data being processed is not available outside of the TEE. For example, the fetching and/or encryption of the data keyed/mapped to the service identifier can be performed in a TEE, such that the plaintext of that data is not available outside of the TEE during that processing. This is an optional aspect of the innovation because data protections are maintained by using the service identifier to search the database, and then encrypting the data before it is mapped to the device identifier. That is, nothing additional (e.g., a connection between the device identifier and the fetched data) is revealed by using the service identifier to fetch data that is already mapped to the service identifier, and then encrypting the fetched data before it is stored in another database mapped to the device identifier. For example, the fetched data cannot be used to join (e.g., perform a join operation on) the separate sets of data from the two databases.

A trusted execution environment (TEE) is a secure area within a computer's processor, or a separate hardware component designed to protect sensitive data from unauthorized access or tampering. It ensures that processes, such as cryptographic processes, authentication, or handling private data, are performed in an isolated environment that is protected from the operating system and other systems. The isolated execution space of the TEE is a dedicated region in the processor or a separate chip where sensitive processing is performed, such as the techniques discussed herein. It's physically and/or cryptographically separated from the rest of the system, including the main operating system. This isolated execution space enables code/processing to be performed in a way that prevents external interference, ensuring that only authorized code runs inside it.

The TEE includes secure memory, such as a protected set of Random Access Memory (RAM). The protected RAM typically stores the data and code being processed, keeping them encrypted or inaccessible to systems/software outside the TEE. This shields sensitive information, like encryption keys or other sensitive data, from being viewed or modified.

The TEE also includes a set of trusted hardware. The trusted hardware is the physical portion of the TEE, and is often part of the CPU or separate processing hardware. The trusted hardware enforces the data isolation and provides cryptographic tools (e.g., random number generators or hardware-based encryption) to secure the data being processed within the TEE. The trusted hardware ensures the confidentiality and integrity of the TEE beyond software techniques.

Performing one or more operations discussed herein within the TEE provides several technical advantages that enable the privacy preserving data connection operations. For example, data and code inside the TEE stay hidden from everything outside of the TEE, thereby enhancing the protection of data that might be processed in plaintext within the TEE. For example, by revealing plaintext data and making connections between different portions of data within the TEE, the plaintext data and operations performed to make the connections are not detectable by systems or software operating outside the TEE, even if the system is infected with malware because the malware is not authorized to access the TEE environment.

The TEE also ensures that code runs exactly as intended, without tampering. For instance, a process or application can trust that the encryption routines haven't been altered by a third-party system or software. Furthermore, through attestation, a TEE can cryptographically vouch for itself to remote systems. This is important for scenarios like secure cloud computing, where a server needs to demonstrate to a client device that it's handling data in a safe and secure manner. Also, by offloading sensitive tasks to hardware-backed isolation, TEEs can perform high-security operations, such as real-time encryption, faster than software-only solutions that rely on complex, resource-heavy protections. Thus, using a TEE environment to facilitate the performance of one or more operations discussed herein can further ensure the privacy preserving nature of the data connections. However, a TEE environment is not required in all situations.

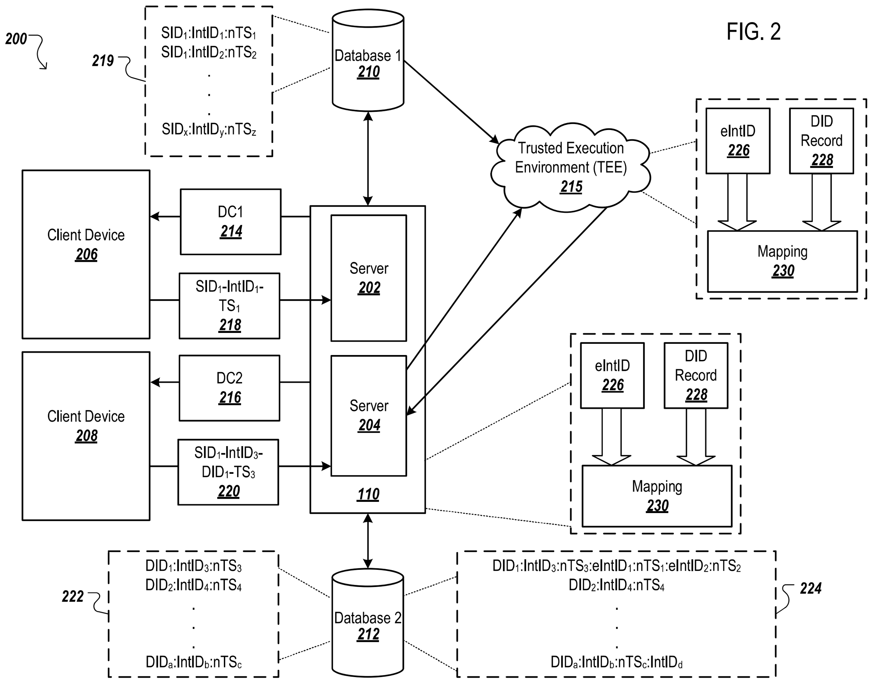

FIG. 2 is a block diagram illustrating a system 200 for joining data that does not include a common key. The system 200 includes the service system 100, which includes two different servers, server 202 and server 204. The system 200 also includes two client devices, client device 206 and client device 208. The system 200 also includes two data bases, a service identifier keyed database 210 (referred to as database 210), and a device identifier keyed database (referred to as database 212). The system 200 also optionally includes a trusted execution environment (TEE) 215. Each of the connections shown between the various components of the system 200 can be made by way of network connections, thereby providing the ability for the components to communicate with each other, and exchange data with each other. Each of the components shown in the system 200 can include hardware memory devices and/or hardware computing devices (e.g., hardware processors or other circuity).

As illustrated by FIG. 2, the service system 110 can distribute a digital component (DC1) 214 to the client device 206, and also distribute a different digital component (DC2) 216 to the client device 208. The distribution of the digital components 214 and 216 to the client devices 206 and 208 need not happen at the same time, and the delivery of each of the digital components to the respective client devices can be completely independent of each other, such that there is no inherent connection between the deliveries of the different digital components to the different client devices. Furthermore, the two client devices 206 and 208 can be running different applications from each other, such that the applications to which the different digital components (e.g., 214 and 216) are delivered need not be related or otherwise linked. As such, information regarding the delivery of the digital components 214 and 216 to the client devices 206 and 208, respectively, is not shared between the client devices 206 and 208, or applications executing on the client devices 206 and 208. The digital components 214 and 216 can be selected and delivered to the client devices 206 and 208 in a manner similar to that discussed above with reference to FIG. 1.

When interaction with the digital component 214 occurs at the client device 206, interaction data 218 is generated and submitted to the server 202 of the service system 110. The server 202 can detect that the interaction with the digital component 214 occurred based on the received interaction data 218. The server 202 can inspect the interaction data 218 and determine that the interaction data includes (i) a service identifier assigned by the service system 110 and (ii) a set of interaction type data (e.g., one or more values) specifying a given type (e.g., first type) of interaction that occurred at the client device 206 (e.g., first device). For example, the server 202 can parse the interaction data 218 and extract the service identifier and data indicating that a click, tap, swipe, hover, or another type of event and/or interaction with the digital component 214 at the client device 206. The interaction data 218 can also include a unique identifier (e.g., sequence of characters) representing the particular instance of the interaction that occurred at the client device 206, which is referred to as an interaction identifier. In some implementations, the type of user interaction can be incorporated as part of the interaction identifier. For example, for a click interaction, the interaction identifier may be formatted as CL1234, where the letters CL represent the interaction type, and the numbers 1234 are the characters that uniquely represent and/or differentiate a particular instance of the interaction from other interactions of the same type.

As part of the inspection of the interaction data 218, the server 202 can also attempt to identify a device identifier of the client device in the interaction data 218, or in other data accompanying (or corresponding to) the interaction data 218. When the server 202 determines that the interaction data 218 does not include a device identifier of the client device 206, the server 202 can classify the interaction data 218 as service identifier keyed interaction data. As used herein, service identifier keyed interaction data refers to interaction data that includes (or is accompanied by) a service identifier issued by the service system 110, but does not include a device identifier of the client device (e.g., client device 206) from which the interaction data (e.g., 218) was received.

User data protection policies may require that certain data be stored separately from other data. For example, a user data protection policy may require that data including a service identifier, but not including a device identifier, be stored in a database keyed to the service identifier, and be protected from being joined, in plaintext, with other sets of data that were separately obtained and include a device identifier, as discussed in more detail below. This can prevent the joining of the plaintext interaction data that was obtained without a device identifier from being joined with another set of data that does include a device identifier, thereby protecting the user data from unintended uses.

In view of these user data protection policies that may require data received with a service identifier, but not a device identifier, be maintained separate from independently obtained interaction data that includes a device identifier, the system 200 can implement multiple independent databases (e.g., 210 and 212) to store different types of interaction data. For example, the database 210 can be implemented, and configured, as a database in which interaction data is keyed to a service identifier included in the interaction data 218 when a device identifier is not included in the interaction data 218. More specifically, the database 210 can include a field for the service identifier and a field for other information conveyed by the interaction data 218 (e.g., interaction type, timestamp, interaction identifier, etc.), but not include a field for a device identifier so that the data stored in the database 210 will be stored without a device identifier.

Based on the determination that the interaction data 218 includes a service identifier (e.g., SID₁), but does not include a device identifier, the server 202 can generate a mapping between the service identifier and other data included in the interaction data 218. For example, assuming that the interaction data 218 includes the service identifier SID₁, the Interaction identifier IntID₁, and the timestamp TS₁, the server 202 can create a mapping between the service identifier SID₁, the interaction identifier IntID₁ (e.g., interaction type data), the timestamp TS₁, and store the mapping in the database 210. Other data can also be mapped to the service identifier, such as an application identifier representing the application executing at the client device 206 in which the interaction with the digital component 214 occurred. Once the interaction data is keyed to the service identifier, the service identifier operates as a search key (e.g., first key) for identifying the corresponding interaction data that is keyed to the service identifier and stored in the database 210.

In some implementations, the timestamp (e.g., TS₁) can be noised, resulting in a noised timestamp (e.g., nTS₁), before being mapped to the service identifier (e.g., SID₁) and stored in the database 210. Noising the timestamp involves intentionally adding random variations or perturbations (noise) to the timestamp to obscure its exact value. This can help protect user data because it ensures that the precise timing of an event, such as an interaction, cannot be directly linked to an individual user or action, protecting user anonymity while still allowing for aggregate analysis using the timestamp. It also prevents the joining of data that is stored in separate databases using the timestamp as a join key because the randomness of the noise added to the timestamps destroys the timestamp value fidelity that would be needed to join the data on the basis of the timestamp.

As shown, the database 210 includes a data structure 219 that includes multiple records, and each record includes a service identifier (e.g., SID₁-SIDₓ) and a set of the interaction data 218 that is keyed to the service identifier. For example, two interaction identifiers IntID₁ and IntID₂ are both keyed to the service identifier SID₁ in different database records indicating that both of the interactions corresponding to the interaction identifiers IntID₁ and IntID₂ are both associated with the service identifier SID₁. In other words, the interaction identifiers IntID₁ and IntID₂ were both performed at client device that submitted the service identifier SID₁ with the interaction identifiers. Furthermore, the client devices that submitted the service identifier SID₁ with the interaction identifiers IntID₁ and IntID₂ did not submit a device identifier with those interaction identifiers. The (noised) timestamps nTS₁ and nTS₂ are also keyed to (e.g., indexed to) the service identifier SID₁ and represent a time of occurrence of the interactions represented by the interaction identifiers IntID₁ and IntID₂, respectively. As such, a query of the database 210 using the service identifier SID₁ will return the records containing the interaction identifiers IntID₁ and IntID₂ and their corresponding timestamps nTS₁ and nTS₂.

In a similar fashion as discussed above, when interaction with the digital component 216 (DC2) occurs at the client device 208, interaction data 220 is generated and submitted to the server 204 of the service system 110. The server 204 can detect that the interaction with the digital component 216 occurred based on the received interaction data 220. The server 204 can inspect the interaction data 220 and determine that the interaction data includes (i) a service identifier assigned by the service system 110 and (ii) a set of interaction type data (e.g., one or more values) specifying a given type (e.g., second type) of interaction that occurred at the client device 208 (e.g., second device). For example, the server 204 can parse the interaction data 220 and extract the service identifier and data indicating that a click, tap, swipe, hover, or another type of event and/or interaction with the digital component 216 at the client device 208. The interaction data 220 can also include a unique identifier (e.g., sequence of characters) representing the particular instance of the interaction that occurred at the client device 208, which is referred to as an interaction identifier. In some implementations, the type of user interaction can be incorporated as part of the interaction identifier. For example, for a click interaction, the interaction identifier may be formatted as CL2345, where the letters CL represent the interaction type as a click interaction, and the numbers 2345 are the characters that uniquely represent and/or differentiate a particular instance of the interaction from other interactions of the same type.

As part of the inspection of the interaction data 220, the server 204 can also attempt to identify a device identifier of the client device 208 in the interaction data 220, or in other data accompanying (or corresponding to) the interaction data 220. When the server 204 determines that the interaction data 220 does include a device identifier of the client device 208, the server 204 can classify the interaction data 220 as device identifier keyed interaction data. As used herein, device identifier keyed interaction data refers to interaction data that includes a device identifier of the client device (e.g., client device 208) from which the interaction data (e.g., 220) was received.

In view of the user data protection policies discussed above (and potentially others), the system 200 can implement multiple independent databases (e.g., 210 and 212) to store different types of interaction data. For example, the database 212 can be implemented, and configured, as a database in which interaction data is keyed to a device identifier included in the interaction data 220 when a device identifier is included in the interaction data 220. More specifically, the database 212 can include a field for the device identifier and a field for other information conveyed by the interaction data 220 (e.g., interaction type, timestamp, interaction identifier, etc.). This differs from the database 210, which did not include a field for the device identifier so that the data stored in the database 210 will be stored without a device identifier. In some implementations, the database 212 can be configured to not include a field for plaintext service identifiers for similar reasons (e.g., so that plaintext service identifiers and plaintext device identifiers are not mapped in a single storage location).

As used herein, a service identifier (e.g., SID₁) refers to an identifier that corresponds to an account rather than any specific device. As such, the same service identifier can be submitted by different devices. Meanwhile, a device identifier (e.g., DID₁) refers to an identifier that corresponds to a specific physical device (e.g., a smart phone or tablet device). As such, the device identifier submitted by a given physical device will remain constant over time even though that device may submit different service identifiers.

Based on the determination that the interaction data 218 includes a device identifier (e.g., DID₁), the server 204 can generate a mapping between the device identifier and other data included in the interaction data 220. For example, assuming that the interaction data 220 includes the Interaction identifier IntID₃, and the timestamp TS₃, the server 204 can create a mapping between the device identifier DID₁, the interaction identifier IntID₃ (e.g., interaction type data), the timestamp TS₃, and store the mapping in the database 212. Other data can also be mapped to the device identifier, such as an application identifier representing the application executing at the client device 208 in which the interaction with the digital component 216 occurred. Once the interaction data is keyed to the device identifier, the device identifier operates as a search key (e.g., second key) for identifying the corresponding interaction data that is keyed to the device identifier and stored in the database 212.

In some implementations, the timestamp (e.g., TS₃) can be noised, resulting in a noised timestamp (e.g., nTS₃), before being mapped to the device identifier (e.g., DID₁) and stored in the database 210. As discussed above, noising the timestamp involves intentionally adding random variations or perturbations (noise) to the timestamp to obscure its exact value. This can help protect user data because it ensures that the precise timing of an event, such as an interaction, cannot be directly linked to an individual user or action, protecting user anonymity while still allowing for aggregate analysis using the timestamp. It also prevents the joining of data that is stored in separate databases using the timestamp as a join key because the randomness of the noise added to the timestamps destroys the timestamp value fidelity that would be needed to join the data on the basis of the timestamp.

In some implementations, the server 204 does not map a service identifier (e.g., SID₁) to the device identifier (e.g., DID₁) even though the service identifier and device identifier are both included in the interaction data 220. For example, as discussed above, the database 212 may not include a field for plaintext service identifiers in order to comply with user data protection policies or mandates. Similarly, when the server 204 determines that a set of interaction data 220 includes both of a service identifier and a device identifier, the server 204 can make a determination that the interaction data 220 (excluding the service identifier) should mapped to the device identifier and be stored in the database 204, rather than being mapped to the service identifier and stored in the database 210.

As shown, after mapping the interaction data 220 to the device identifier the mapping can be stored in an initial data structure 222 of the database 212, which includes multiple records. Each record includes a device identifier (e.g., DID₁-DIDₐ) and a set of the interaction data that is keyed to the device identifier. For example, two interaction identifiers IntID₃ and IntID₄ are respectively keyed to the device identifiers DID₁ and DID₂ in different database records indicating that the interactions corresponding to the interaction identifiers IntID₃ and IntID₄ are independently associated with the device identifiers DID₁ and DID₂. In other words, the interaction identifiers IntID₃ and IntID₄ were performed at different client devices having the device identifiers DID₁ and DID₂, respectively. Furthermore, the (noised) timestamps nTS₃ and nTS₄ are respectively keyed to (e.g., indexed to) the device identifiers DID₁ and DID₂ and represent times of occurrence of the interactions represented by the interaction identifiers IntID₃ and IntID₄, respectively. As such, a query of the database 213 using the device identifier DID₁ will return the records containing the interaction identifier IntID₃ and its corresponding timestamp nTS₃. Similarly, a query of the database 213 using the device identifier DID₂ will return the records containing the interaction identifier IntID₄ and its corresponding timestamp nTS₄.

As illustrated by FIG. 2, and described above, the data structures 219 and 222 do not include a same identifier (e.g., key) for any of the records. For example, the data structure 219 includes data keyed to service identifiers, while the data structure 222 includes data keyed to device identifiers and the is no way to join these data structures 219 and 222 based on their contents, particularly in view of the noised time stamps that are used. This is by design in some cases, but as mentioned, it results in a data fragmentation situation where less than all of the information needed to perform a set of processing is included in either of the data structures 219 or 222. The inability to join the records of the data structures 219 and 222 prevents the service system 110 (or another computing device/system) from being able to perform operations that require data from each of the data structures 219 and 222.

To overcome this problem, the service system 110 can leverage situations in which a device identifier and a service identifier are received in a same set of interaction data (e.g., interaction data 220) to aggregate data from different , while still complying with user data protection requirements. For example, when the server 204 detects the interaction with the digital component 216 and/or determines that the interaction data 220 includes both of a service identifier (e.g., SID₁) and a device identifier (e.g., DID₁), the server can initiate a series of operations to aggregate the information needed without storing the plaintext service identifier (e.g., SID₁) with the corresponding plaintext device identifier (e.g., DID₁), and without revealing the link/association between the service identifier (e.g., SID₁) and the corresponding device identifier (e.g., DID₁).

The server 204 (or another component of the service system 110) can extract (e.g., remove, copy, cache, or otherwise record) the service identifier SID₁ from the interaction data 220, and use the service identifier SID₁ to search the database 210 for records that are keyed to the service identifier SID₁. When a match between the service identifier SID₁ extracted from the interaction data 220 and the key of one or more records in the database 210 is identified, the server 204 fetches the one or more records from the database 210. For example, as previously discussed the data structure 219 includes two records that are keyed to the service identifier SID₁. As such, the server 204 will fetch those two matching records that include SID₁ from the database 210 based on the search using SID₁.

The service system 110 then encrypts the interaction data fetched based on the search to obtain encrypted interaction data 226 (e.g., eIntD₁ and eIntD₂). The service system 110 can use the encrypted interaction data 226 and a device identifier keyed record 228 to generate a mapping 230 between two or more of the encrypted interaction data (e.g., eIntID₁ and eIntID₂), the noised timestamps (e.g., nTS₁ and nTS₂) corresponding to the encrypted interaction data, the device identifier (e.g., DID₁), the interaction data (e.g., IntID₃) received with the device identifier, and the noised timestamp (e.g., nTS₃) corresponding to the interaction data (e.g., IntID₃) received with the device identifier (e.g., in the interaction data 220). The service system 110 can store this mapping 230 in the database 212 and key the record to the device identifier (e.g., DID₁). The mapping 230 can be stored in a privacy preserving aggregated data structure 224 so that the data included in the mapping 230 can be searched/fetched using the device identifier (e.g., DID₁) in a search of the database 212. In this way, the service system 110 can create a relationship between the data that was separately stored as required by data protection policies, which can be used to process the aggregated data and without revealing any of the underlying data in plaintext. In this way, only an entity having the decryption key required to decrypt the plaintext can access the data.

As previously discussed, the TEE 215 can be used in various ways as desired. For example, one or more of the operations discussed above can be performed in the TEE 215 to reduce the likelihood of data leakage or exposure to third parties. More specifically, the encryption of the interaction data to obtain the encrypted interaction data 226 can be performed within the TEE 215. Similarly, the generation of the mapping 230 between the encrypted interaction data 226 and the DID Record 228 can be performed within the TEE 215. In these situations, the TEE 215 can be provided (or request) the data required to generate the mapping 230 from each of the databases 210 and 212, either directly or through interaction with the service system 110, perform the data processing necessary to generate the mapping 230, and then output the mapping 230 to the service system 110 for storage in the database 212.

Once the mapping 230 has been generated, the generation and/or distribution of digital components can be modified using the mapping 230. For example, because the mapping 230 enables analysis of a more complete set of interactions than either of the data structures 219 or 222 alone, actions that were performed across the client devices 206 and 208 can be analyzed together to update how the digital components DC1 and DC2 are distributed to other client devices. For example, distribution keywords can be added or removed, or other distribution parameters can be modified. In a specific example, a conversion that occurred at client device 208 can be attributed to a click of a digital component that occurred at client device 206, and the distribution parameters corresponding to the digital component can be updated based on the attribution.

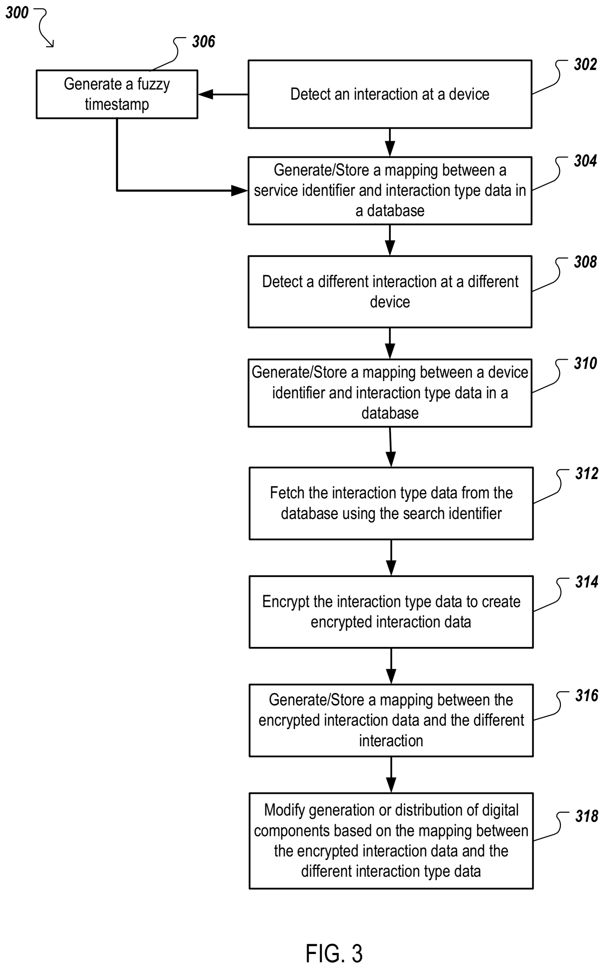

FIG. 3 is a flow chart of an example process 300 for generating connections between data while preserving privacy. Operations of the process 300 can be performed by one or more systems that include one or more computing devices. In some implementations, the process 300 utilizes a TEE to enhance privacy protections. Operations of the process 300 can be implemented as instructions stored on one or more non-transitory computer readable medium, and execution of the instructions can cause specially configured and/or programmed circuitry to perform operations of the process 300.

An interaction is detected at a device (302). In some implementations, the interaction (e.g., first interaction) is detected based on a given set of interaction data (e.g., first interaction data) received from a client device (e.g., a first device). The given set of interaction data can include, for example, (i) a service identifier assigned by a service system and (ii) a given set of interaction type data (e.g., first interaction type data) specifying a given type (e.g., first type) of interaction that occurred at the client device. The given set of interaction data does not include a device identifier of the client device.

In some implementations, the system performing the operations of the process 300 can examine the given set of interaction data and determine, based on the examination, whether the given set of interaction data includes a device identifier. For example, the system can access a particular field of a packet carrying the given set of interaction data to determine whether that particular field includes a device identifier, is empty, or contains a null value. When the system does not detect a device identifier in the particular field or detects that the particular field is empty or contains a null value, the system can make the determination that the given set of interaction data does not include a device identifier. In some implementation, detecting the interaction at the client device (e.g., first device) results in detecting a click interaction at a given time (e.g., a first time).

A mapping (e.g., first mapping) between the service identifier and the given set of interaction type data is generated and stored in a given database (e.g., first database) (304). As previously discussed, the mapping can include a mapping between two or more of the service identifier, the given set of interaction data, and a timestamp representing a time at which the interaction corresponding to the given set of interaction data occurred. The service identifier operates as a key (e.g., first key) for identifying the first interaction type data in the given database.

In some implementations, the process 300 can generate a fuzzy timestamp (e.g., first fuzzy timestamp) for the given set of interaction data (306). For example, as previously discussed the fuzzy timestamp can be generated by applying noise to the timestamp representing the time at which a given interaction identified in the given set of interaction data occurred. In some implementations, the given interaction is a click interaction, and the fuzzy timestamp can be generated to obfuscate the time at which the click interaction occurred. When a fuzzy timestamp is generated, the mapping generated and stored at operation (304) can be a mapping between the service identifier, data representing a given interaction (e.g., click) and the fuzzy timestamp rather than the raw timestamp.

A different interaction is detected at a different client device (e.g., second device) based on different interaction data (e.g., second interaction data) (308). In some implementations, the different interaction data includes (i) the same service identifier assigned by the service system as the given set of interaction data, (ii) a device identifier (e.g., second device identifier) of the different device, and (iii) different interaction type data (e.g., second interaction type data) specifying a different type of interaction (e.g., a second type of interaction) that occurred at the different client device. The different interaction can be detected at the different client device by detecting a conversion interaction at a different time (e.g., second time) than the given time at which the given interaction occurred at the given client device.

In some implementations, the system performing the operations of the process 300 can examine the different set of interaction data and determine, based on the examination, whether the different set of interaction data includes a device identifier. For example, the system can access a particular field of a packet carrying the different set of interaction data to determine whether that particular field includes a device identifier, is empty, or contains a null value. When the system detects a device identifier in the particular field, the system can make the determination that the different set of interaction data does include a device identifier.

A mapping (e.g., first mapping) between the device identifier and the different set of interaction type data (e.g., second interaction type data) is generated and stored in a different database (e.g., second database) (304). As previously discussed, the mapping can include a mapping between two or more of the device identifier, the different set of interaction type data, and a timestamp representing a time at which the interaction corresponding to the different set of interaction type data occurred. The device identifier operates as a key (e.g., second key) for identifying the different interaction type data in the different database.

In some implementations, the process 300 can generate a fuzzy timestamp (e.g., second fuzzy timestamp) for the different set of interaction type data. For example, as previously discussed the fuzzy timestamp can be generated by applying noise to the timestamp representing the time at which a given interaction identified in the different set of interaction type data occurred. In some implementations, the different interaction is a conversion interaction, and the fuzzy timestamp can be generated to obfuscate the time at which the conversion interaction occurred. When a fuzzy timestamp is generated, the mapping generated and stored at operation (310) can be a mapping between the device identifier, data representing the different interaction (e.g., conversion) and the fuzzy timestamp rather than the raw timestamp that was received with the different set of interaction type data.

The given (e.g., first) interaction type data is fetched from the given (e.g., first) database (312). In some implementations, the given interaction type data is fetched based on a search of the given database using the service identifier received in the different interaction data as the key (e.g., second key). In some implementations, the system performing operations of the process 300 can initiate a search of the given database using the service identifier received in the different interaction data as the key, and receive a set of matching database records having a search key that matches the key. Continuing with the example above, the search results in the identification, among the set of matching database records, of the given set of interaction type data as a responsive search result to the search. In some implementations, the identification of the given set of interaction type data as a responsive search result to the search is conditioned on (e.g., based on) the fuzzy timestamp (e.g., first fuzzy timestamp) of the given set of interaction type data being within a specified lookback period that was prior to the different time of the conversion interaction. The lookback period can be, for example, 1, 3, 7, 20, or another appropriate number of hours, days, etc. prior to the time at which a conversion event occurred. In this way, the system can ensure that two instances of interaction data are sufficiently temporally related before linking those two interactions.

For one or more database records in the given database identified using the service identifier, the system may determine that a particular database record has a fuzzy timestamp (e.g., second fuzzy timestamp), or a regular timestamp, that is outside of the specified lookback period (e.g., occurred more than the specified amount of time prior to the different interaction). In this situation, the system can discard those one or more database records based on the determination that the fuzzy timestamp is outside the specified lookback period.

The given/fetched interaction type data is encrypted, resulting in the creation of encrypted interaction data (e.g., encrypted first interaction data) (314). For example, a public key can be used to encrypt the given/fetched interaction type data, such that the corresponding private key is required to recover/decrypt the given interaction type data. In some implementations, the encryption involves encrypting a click interaction identifier, resulting in an encrypted click interaction identifier that hides the plaintext value of the click interaction identifier.

A mapping (e.g., third mapping) between the encrypted interaction data and the different interaction type data stored in the different database is generated and stored in the different database (316). In some implementations, the mapping is generated between an encrypted click identifier from the given database and a conversion identifier (e.g., second interaction data) stored in the different database For example, the mapping can include, or be used to create, an attribution of a conversion interaction performed at one device to a click interaction performed at another device. For example, when the click interaction occurred within the lookback period of the time of the conversion interaction, the conversion interaction can be attributed to the click interaction.

Generation and/or distribution of digital components is optionally modified based on the mapping between the encrypted interaction data and the different interaction type data (318). As discussed above, the modification of distribution can be performed based on changes to distribution parameters of a digital component that are made due to the identified link between the given set of interaction type data and the different set of interaction type data. For example, attribution of a conversion event to a click event can be used to adjust distribution keywords and/or selection values used to determine which digital component is selected for distribution to client devices. The generation of digital components can similarly be modified, for example, based on attributes of the digital component with which the click interaction occurred.

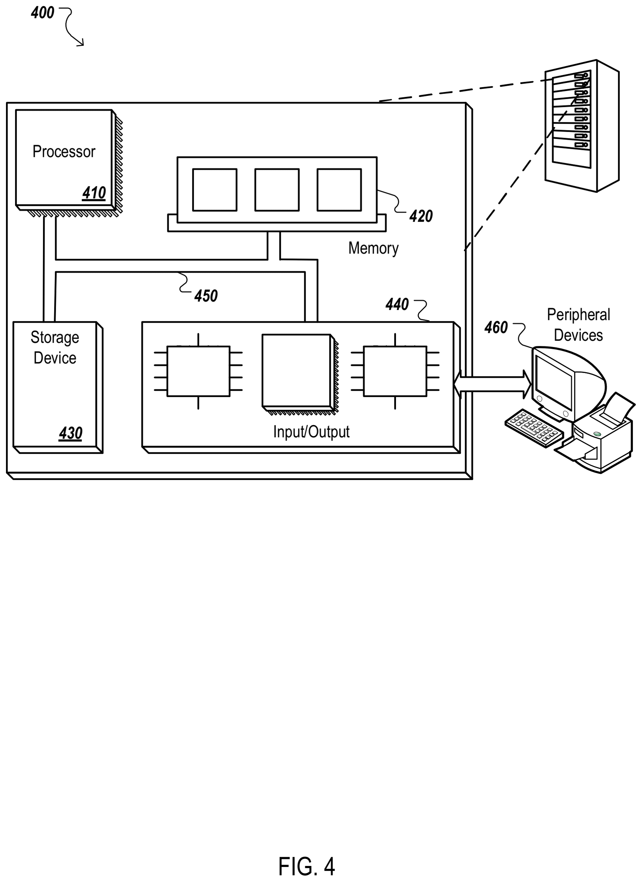

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface device, e.g., an Ethernet card, a serial communication device, e.g., and RS-232 port, and/or a wireless interface device, e.g., and 802.11 card. In another implementation, the input/output device can include driver devices configured to receive input data and send output data to other peripheral devices, e.g., keyboard, printer and display devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

For situations in which the systems discussed here collect and/or use personal information about users, the users may be provided with an opportunity to enable/disable or control programs or features that may collect and/or use personal information (e.g., information about a user's social network, social actions or activities, a user's preferences or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
detecting, by one or more data processing apparatus, a first interaction at a first device based on first interaction data that includes (i) a service identifier assigned by a service system and (ii) first interaction type data specifying a first type of interaction that occurred at the first device, wherein the first interaction data does not include a first device identifier of the first device;
generating, by the one or more data processing apparatus, a first mapping between the service identifier and the first interaction type data in a first database, wherein the service identifier operates as a first key for identifying the first interaction type data in the first database;
detecting, by the one or more data processing apparatus, a second interaction at a second device based on second interaction data that includes (i) the service identifier assigned by the service system, (ii) a second device identifier of the second device, and (iii) second interaction type data specifying a second type of interaction that occurred at the second device;
generating, by the one or more data processing apparatus, a second mapping between the second device identifier of the second device and the second interaction type data in a second database that differs from the first database, wherein the second device identifier operates as a second key for identifying the second interaction type data in the second database;
fetching, by the one or more data processing apparatus and in response to detecting the second interaction, the first interaction type data from the first database based on a search of the first database using the service identifier received in the second interaction data as the second key;
encrypting, by the one or more data processing apparatus, the first interaction type data fetched based on the search, thereby resulting in encrypted first interaction data;
generating, by the one or more data processing apparatus, a third mapping between the encrypted first interaction data and the second interaction type data in the second database; and
modifying generation or distribution of digital components through a network based on the third mapping between the encrypted first interaction data and the second interaction type data.

2. The method of claim 1, wherein:
encrypting the first interaction type data fetched based on the search comprises encrypting a click interaction identifier, resulting in an encrypted click interaction identifier; and
generating the third mapping between the encrypted first interaction data and the second interaction data in the second database comprises generating a mapping between the encrypted click interaction identifier and the second interaction data in the second database.

3. The method of claim 2, wherein:
detecting the first interaction at the first device comprises detecting the click interaction at a first time;
detecting the second interaction at the second device comprises detecting a conversion interaction at a second time; and
generating the third mapping comprises storing an attribution of the conversion interaction to the client interaction.

4. The method of claim 3, further comprising generating a first fuzzy timestamp by applying noise to a timestamp representing the first time of the click interaction to obfuscate a time at which the click interaction occurred.

5. The method of claim 4, wherein fetching the first interaction type data from the first database comprises:
initiating a search of the first database using the service identifier received in the second interaction data as the second key;
receiving a set of matching database records having a search key that matches the second key; and
identifying, among the set of matching database records, the first interaction type data as a responsive search result to the search based on the first fuzzy timestamp being within a specified lookback period prior to the second time of the conversion interaction.

6. The method of claim 5, further comprising:
determining that a given matching database record among the set of matching database records has a second fuzzy timestamp that is outside of the specified lookback period; and
discarding the given matching database record based on the determination that the second fuzzy timestamp is outside of the specified lookback period.

7. A non-transitory computer readable medium storing instructions that, upon execution by one or more data processing apparatus of a first system, cause the one or more data processing apparatus to perform operations comprising a method according to any preceding claim.

8. A system, comprising:
one or more memory devices; and
one or more data processing apparatus, including processing circuitry, configured to access the one or more memory devices and execute instructions that cause the one or more data processing apparatus to perform operations comprising a method according to any preceding claim.
